# EUROPEAN PATENT SPECIFICATION

(11) **EP 3 883 888 B1**
(45) Date of publication and mention of the grant of the patent: **22.05.2024**
(21) Application number: 19813185.6
(22) Date of filing: 20.11.2019
(51) Int. Cl.: C02F 1/28, C02F 1/44, C02F 101/10

(54) **SYSTEM FOR REDUCING ALGAE BLOOM AND MICROBIAL GROWTH IN AQUEOUS SYSTEMS AND A METHOD THEREFOR**
SYSTEM ZUR REDUZIERUNG VON ALGENBLÜTE UND MIKROBIELLEM WACHSTUM IN WÄSSRIGEN SYSTEMEN UND EIN VERFAHREN DAFÜR
SYSTÈME DE RÉDUCTION DE PROLIFÉRATION D'ALGUES ET DE CROISSANCE MICROBIENNE DANS DES SYSTÈMES AQUEUX ET PROCÉDÉ ASSOCIÉ

(30) Priority: 21.11.2018 NL 2022046
(43) Date of publication of application: 29.09.2021
(73) Proprietor: Aquacare Europe B.V., 5222 BP 's-Hertogenbosch (NL); Baas, Koos Jan, 5216 AW 's-Hertogenbosch (NL)
(72) Inventor: BAAS, Koos Jan, 5216 AW 'S-HERTOGENBOSCH (NL)
(74) Representative: Arnold & Siedsma
(86) International application number: PCT/NL2019/050764
(87) International publication number: WO 2020/106148

(56) References cited:
- FR-A1- 3 015 969
- US-A1- 2010 068 113
- US-A1- 2018 111 863

## Description

The present invention relates to a system for reducing algae bloom and microbial growth in aquatic systems.

Algae are unicellular or multicellular micro-organisms and are common in aquatic systems. Due to their high typically photosynthetic growth using sunlight and carbon dioxide as primary inputs, algae are considered the base of aquatic food webs and are important to the nutrition of aquatic systems. The abundance and growth of algae are governed by the availability of light, temperature and major and minor nutrients such as nitrogen and phosphorous (major nutrients) and iron, other trace metals and vitamins (minor nutrients). Furthermore, the activity of predators and/or viruses influences the algae bloom.

Algae blooms, mass development of algae that can lead to discoloration of the water, occur in stagnant or slowly flowing waters, usually as a consequence of, or related to, higher water temperatures, sunlight, and elevated phosphorus and nitrogen concentrations. Some algae blooms can be part of a natural seasonal succession in a given aquatic ecosystem. However, many algae blooms have been linked to the excess input of foremost nitrogen and phosphorus compounds into the waters; mainly from urban pollution or agricultural fertilizer runoff.

Algae blooms can cause severe damage to the ecosystem's function and to human health and can have intense economic impact. At first, harmful algae blooms (HAB) lead to visible discoloration of the water, which can negatively affect bottom-dwelling algae and plants, such as seagrass, by limiting the light reaching the bottom. These impacts can have wider cascading effects in the ecosystem, for example when seagrass meadows are important nursing grounds for fish. Eventually, the large quantities of algae biomass will sink to the bottom, where the biomass is degraded by bacteria, a process causing a major utilization of oxygen and leading to oxygen depletion in the water, a state called hypoxia. Hypoxia, in turn, can cause massive fish kills and the death of bottom-dwelling animals. The dead animal biomass is subject to further bacterial degradation, exacerbating the hypoxia.

Algae blooms can also cause human harm and economic impact by the production of toxins, some of them being volatile. Toxins not toxic to aquatic invertebrates, such as clams and shellfish, and fish accumulate in the food chain but cause health problems upon human consumption of such seafood collected from affected waters. Human health effects can comprise gastrointestinal and neurological problems, ranging from stomach aches to temporary or permanent cognitive and other neurological damage, kidney failure, heart arrest, and death. Volatile toxins can cause respiratory problems for beach goers, especially those prone to asthma. Toxic HABs can also affect aquatic mammals, such as manatees, and contact with HAB-laden lake water has been reported to cause death in cows and dogs.

Economic impacts from HAB can originate from the closure of fishing grounds and clam or oyster beds due to toxin accumulation in harvested seafood, from loss of fish stocks as a result of hypoxia, or from negative effects on tourism caused by health concerns and the unsightly discoloration and smell of algae blooms in recreational waters.

Algae blooms will, in most but not all cases, usually subside after a while and the ecosystem returns to a "normal" state. As most HAB are related to excessive nitrogen and/or phosphorus concentrations in the water originating from human activities, however, in most cases the algae blooms will re-occur annually, or at other intervals, if the environmental conditions and practices, namely the input of nitrogen and/or phosphorus compounds, remain unchanged.

Phosphorus plays a major role in the structural framework of DNA and RNA. Living cells use phosphate to transport cellular energy in the form of adenosine triphosphate (ATP). ATP is also essential for the key regulatory cell process of phosphorylation. Phospholipids are the main structural components of cell membranes. Since phosphorus is required for all forms of life, phosphorus removal from the water to very low concentrations is an effective measure to prevent microbial and algae growth in such waters.

Phosphorus removal is, therefore, a feasible venue to mitigate algae blooms. Such mitigation can occur through effective phosphorus removal within the natural body of water, or by processing natural surface water to remove the phosphorus. Or mitigation can intercept phosphorus sources before they reach natural surface waters; for example, as a final treatment step in wastewater or storm water treatment prior to discharge to natural bodies of water, or as a treatment of agricultural, industrial, or urban water runoff prior to reaching natural bodies of water.

Since the limitation of growth under complete or severe phosphorus removal applies not only to algae but to all aquatic microorganisms, phosphorus removal is also an effective venue to prevent microbial growth, including bacterial growth, in water systems including, but not limited to water-driven cooling systems, water storage and distribution systems, or water treatment systems, such as reverse osmosis and desalination systems. In such systems, microbial growth can form a biofilm, a layer of microorganisms usually embedded in a matrix of various organic compounds, a process called biofouling. Biofouling can interfere with the functioning of water treatment, storage, or cooling systems or with further water processing and treatment.

In order to solve these issues, the commonly used method is the removal of phosphate from sewage water with less than 100 ppm phosphorus content occurs by running the sewage water through a device filled with lanthanum hydroxide. By addition of sodium hydroxide to this flow-through device for between 4 and 12 hours, the phosphate can be desorbed from said flow-through device and, by collecting the effluent of the sodium hydroxide treatment, be recycled.

Alternatively, a system for reducing algae bloom and microbial growth in aqueous systems is disclosed in US 2018/0111863 A1. Said system includes a phosphate adsorption container with a phosphate adsorption element contained therein.

Furthermore, US 2010/0068113 A1 discloses that phosphorous ions are extracted from solutions by absorbing phosphorous ions in a scavenger and by releasing the phosphorous ions into an eluate during regeneration of the scavenger. Said regeneration is performed by ammonia.

An objective of the present invention is to provide a system for reducing algae bloom and microbial growth in aqueous systems that obviates or at least reduces the aforementioned problems.

This objective is achieved with the system according to the invention for reducing algae bloom and microbial growth in aqueous systems, the system according to claim 1.

It will be understood that the term ingress in claim 1 also refers to inlet and vice versa, and that the term egress in claim 1 refers to outlet and vice versa.

The removal or reduction of phosphorus compounds is accomplished by adsorption of phosphates (or phosphorus-containing substances) out of the phosphate rich influent water flow by ion exchange adsorption in a water treatment system, more specifically a phosphate adsorption element, that allows high throughput processing of water and achievement of very low effluent phosphorus concentrations.

Phosphate compounds in water can be classified in ortho-phosphate, poly-phosphate, organo phosphonate, floating phosphate and colloidal phosphate. Ortho-phosphate, poly-phosphate, organo phosphonate can be removed by adsorption. Floating phosphate and colloidal phosphate can be removed by conventional filtration techniques.

In the system of the invention is the adsorption element the element that adsorbs phosphate compounds which are soluble in water. Therefore, the concentration of phosphates in water will be reduced to up to 10 parts per billion (ppb). The concentration of the phosphates can be tuned to the desired levels by choosing the phosphate adsorption element.

The phosphate adsorption element can be dedicated to the desired phosphate concentration in water and comprises a resin and/or beads. The resin and/or beads include iron oxide. Several iron oxide crystal structures are known. The crystal structure of the iron oxide together with the carrier is especially directive for the level of adsorption of the phosphate. An advantage of a resin is the well known structure and controlled crystallization of iron oxide, therefore, a resin has a well known life span when regenerated. In an alternative system of the invention beads are used. Such beads are relatively cheap compared to a resin but lack uniformity and therefore it is hard to predict the life span. It will be understood that also other suitable adsorption elements can be envisaged in accordance to the invention.

The influent filtration unit, preferably a micro-filter, such as sand bed filter or a helophyte filter, that filters particles up to < 1 micron. This results in an influent water flow without particles bigger than 1 micron. These particles are preferably removed from the flow before the adsorption vessel in order to prevent the adsorption vessel of clogging. The influent filtration unit will therefore filter floating phosphate and colloidal phosphate.

According to the invention the regeneration system is operatively coupled with the at least on adsorption vessel and can regenerate the adsorption element. This will result in regenerated adsorption elements and the life span of these elements will be increased. Furthermore, the regeneration system is configured for holding a regeneration solution. Therefore, the regeneration system is capable of holding the phosphates dissolved in the regeneration solution. An advantage of the regenerating system is the possibility to regenerate the adsorption element in-line. This provides an efficient regeneration process.

With the regeneration filter of the unit of the system according to the invention the regeneration system can separate the phosphates from the regeneration solution. As a result valuable recourses are obtained in the form of phosphate compounds. These phosphate compounds can be used as fertilizer on farmland and/or to grow algae in a controlled manner. Furthermore, controlled feed of algae results in the production of desired molecules.

The system according to the invention comprises a recycling loop configured to recycle the regeneration solution. This will result in reusable regeneration solvent and a minimum of loss of the regeneration solvent. This enables both an efficient and effective phosphate removal. As s further effect, this enables a (nearly) stand-alone system that can be used in remote locations.

Yet another advantage of the system according to the invention is that it produces a minimum of waste. Therefore, the system is environmentally friendly and produces a minimum of pollution.

Yet another advantage of the system according to the invention is that the water quality will increase. As a result the flora and fauna will benefit from this and will be re-established to a normal state. Furthermore, cattle and/or pets will not be harmed when contacting the water.

An extra effect of the system according to the invention is that the system renders it possible to remove heavy metals, residues of medication and/or organic carbons. This will result in an increase of the water quality.

In a presently preferred embodiment multiple influent filtration units and/or adsorption vessels are provided. When one of the influent filtration units and/or adsorption vessels is saturated and/or is being regenerated the other influent filtration units and/or adsorption vessels provide a continuous flow of water or effluent.

An advantage of the system according to such embodiment of the invention is that phosphate containing influent water, especially a phosphate rich influent water flow, flow can be constantly delivered to the system. As a result the down time of the system is reduced and therefore the operational costs will be lowered.

According to the invention the regeneration system comprises at least four regeneration subsystems.

An advantage of the system having two or more regeneration sub-systems is that the regeneration solution can be hold by the regeneration subsystem. As a result multiple volumes/batches of regeneration solution can be used to in the regeneration subsystem.

Surprisingly it was found that providing the system with two or more regeneration sub-systems is that different stages of the treatment of the phosphate rich water can be performed. For example a pre-treatment phase, adsorption phase, regeneration phase, and neutralising of the reactor after the regeneration phase.

An advantage of a regeneration sub-system providing a pre-treatment phase is that surface water and waste water often comprises solid phosphate particulates. Therefore, to improve the phosphate recovery it is useful to trap such particles. A further advantage of such a pre-treatment step is that further regeneration sub-systems are less prone to clog.

Providing a neutralisation phase to the regeneration sub-system reduces the risk of clogging due to the fact that the first treated effluent after a regeneration step might comprise a pH which is too high. This depends on the used regeneration solution. Therefore, a solution comprising a pH of about 7 to 9.5 is flushed over the adsorption material.

In other words, the regeneration of the adsorption material is performed at a pH of 10.5 and charging the adsorption material is performed at a pH of about 7 to 9.5.

It will be understood that the different sub-systems can process different phases.

In a further preferred embodiment according to the invention, the regeneration sub-system is provided with an ingress above an upper layer of the adsorption material, preferably wherein the ingress is provided to about 25 cm of the upper layer of the adsorption level.

Providing such an ingress reduces the down time of the regeneration sub-system as the regeneration solution can regenerate the adsorption material quicker. Alternatively, the regeneration solution is provided from the bottom of the adsorption material and the ingress is used as an egress.

In a further preferred embodiment according to the invention, the ingresses are provided with a distribution device such as a nozzle.

Such a distribution device provides an equal influent to the adsorption vessel.

According to the invention the regeneration subsystems are provided in a type of cascade configuration, wherein the separated regeneration solution flows back to the regeneration system, wherein the cascade configuration of the regeneration subsystems is configured to direct the regeneration solution from a regeneration subsystem with a low phosphate concentration to a regeneration subsystem with a high phosphate concentration.

An advantage of the system according to the invention is that the phosphate concentration in the regeneration solution will increase.

According to the invention, the volume of one batch of regeneration solution will flow multiple times through a saturated adsorption vessel. As a result the regeneration solution may even approach the saturation level of phosphates in the regeneration solution.

According to the invention the regeneration filter is operatively coupled to the egress of the regeneration subsystem comprising the highest phosphate concentration.

An advantage of the system according to the invention is that the phosphate can be separated from the regeneration solution. As a result valuable recourses will be recovered from the regeneration solution. These resources can be used as fertilizers, for example.

Another advantage of the system according to the invention is that the regeneration solution can be recovered. As a result a minimum loss of regeneration solution is achieved and the system according to the invention is therefore more effective and efficient.

In an even further embodiment according to the invention the system further comprises a phosphate sensor configured for sensing the phosphate concentration at the egress of the adsorption vessel.

An advantage of the system according to the invention is that saturation of the adsorption vessel can be detected with the phosphate sensor. As a result the adsorption vessel holding the adsorption element can be automatically regenerated when the saturation level is reached. The sensor will detect an increase of the phosphate concentration when the adsorption vessel is saturated.

Another advantage of the system according to the invention is that the life cycle of the adsorption element can be monitored. This will help in an efficient management of the system, wherein the adsorption element can be replaced before it is fully degraded and regeneration would not be feasible anymore.

In an even further embodiment according to the invention the system further comprises a control unit, wherein the control unit is configured to control the system. The controller enables operation of a (highly) automated system which for example can be controlled by an operator, optionally from a distance, which helps to operate systems located at remote places.

A further advantage of the system according to the invention is that the system can control the influent intake. Therefore, the intake of influent can be dependent of the phosphate level of the influent.

According to the invention the system further comprises at least two pumps, wherein the first pump is configured to pump the influent and the second pump is configured to pump the regeneration solution.

An advantage of the system according to the invention is that the influent intake and regeneration solution can separately flow through the system. This enables simultaneous filtering and regeneration, especially in an embodiment having multiple vessels or containers. As a result the system will operate efficient and effective.

In an even further embodiment according to the invention the regeneration filtration unit is a nano-filtration unit.

An advantage of the system according to the invention with a nano-filtration unit is that phosphate compounds and regeneration solution can be separated effectively. This will result in valuable phosphate compounds and regeneration solution which is recyclable. Furthermore, this allows a system which even reduces further the waste.

In an even further embodiment according to the invention the at least one influent filtration unit is an at least one ultra filtration unit.

An advantage of the system according to the invention with the ultra-filtration unit is that particles < 1 micron can be filtered. This will prevent the adsorption vessel of clogging.

In an even further embodiment according to the invention the regeneration solution is chosen from the group of aqueous sodium hydroxide, aqueous potassium hydroxide, or a mixture thereof.

An advantage of the system according to the invention is, with a solution from the aforementioned group, that these chemicals regenerate the adsorption element. The adsorption element releases the phosphates and dissolves in the regeneration solution. Sodium hydroxide and/or potassium hydroxide do not precipitate phosphates.

A further advantage of the system according to the invention is that these chemicals are readily available. As a result the regeneration solution is cheap.

In an even further embodiment according to the invention the at least one influent filtration unit and/or the regeneration system comprises a sensor, wherein the sensor is configured to measure the phosphate level in the effluent.

An advantage of the system according to the invention is that the phosphate level at various stages in the system can be measured. This will provide an overview of the efficiency of the system.

In an even further embodiment according to the invention the system comprises a concentrated regeneration solution tank. Such a tank provides the regeneration solution with a concentrated regeneration solution in order to keep the concentration of the regeneration solution constant.
- The invention further relates to a method according to claim 6.

The method provides similar effects and advantages as described for the system. For the purpose of the invention the step of adsorbing the phosphate relates to adsorbing phosphate on a phosphate adsorption element hold by the adsorption vessel. Furthermore, the regeneration solution is an aqueous solution, wherein the concentration of the regeneration solution is in the range of 1% - 15%, preferably in the range of 1% - 10%, more preferably in the range of 2% - 7%, most preferably the concentration is about 3%.

In an embodiment according to the method of the invention, the method additionally comprises the step of separating the phosphate and regeneration solution.

In a further preferred embodiment according to the invention the adsorbing is performed at a pH of 7 - 9, and the regeneration is performed at a pH of 10 - 11.

It was found that performing the adsorption and regeneration with this pH range an efficient and effective reduction of algae bloom and microbial growth in aqueous systems was achieved.

With the invention a composition comprising phosphate is obtainable by the method according to the invention after the separating step, wherein the composition is derived from the system according to the invention at the regeneration filtration unit.

The composition provides similar effects and advantages as described for the system and method and can be used as fertilizer, for example.

With the invention an effluent is obtainable by the method according to the invention after the adsorbing the phosphate step, wherein the effluent is derived from the system according to the invention at the egress of the adsorption vessel.

The effluent provides similar effects and advantages as described for the system, method and composition.

The effluent obtainable by the method according to the invention after the phosphate step relates to the adsorbing the phosphate from the phosphate rich influent water flow on a phosphate adsorption element step.

Further advantages, features and details of the invention are elucidated on the basis of preferred embodiments thereof, wherein reference is made to the accompanying drawings, in which:
- figure 1 shows a system according to the invention;
- figure 2 shows a regeneration sub-system;
- figure 3A shows a method according to the invention;
- figure 3B shows an alternative method according to the invention;
- figure 4 shows experimental results of the concentration of phosphorous in ppb (upperline) in the average water intake was plotted in time (days); and
- figure 5A and B show a breakthrough curve and phosphorus adsorption capacity.

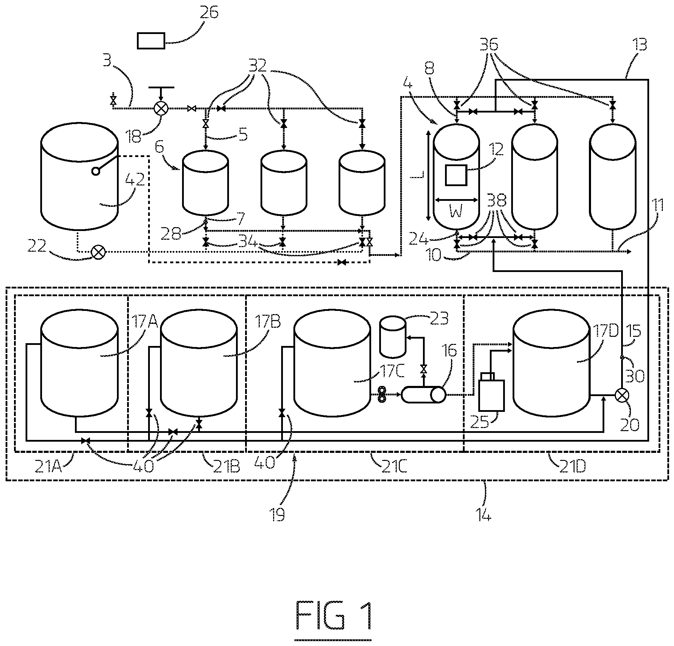

System 2 (figure 1) for reducing algae bloom and microbial growth in aqueous systems comprises system inlet 3, influent filtration unit 6, provided with influent filtration unit ingress 5 and influent filtration unit egress 7. In the illustrated embodiment three filtration units 6 are provided. Influent filtration unit ingress 5 is provided with influent filtration unit ingress valves 32. Influent filtration unit egress 7 is provided with influent filtration unit sensor 28 and influent filtration unit egress valves 34.

Operatively coupled to influent filtration unit 6 is adsorption vessel 4 with length L and width W, provided with adsorption vessel ingress 8 and adsorption vessel egress 10 connected to system outlet 11. Adsorption vessel ingress 8 is provided with adsorption vessel ingress valves 36. In the illustrated embodiment three adsorption vessels can be shown. Adsorption vessel egress 10 is provided with adsorption phosphate sensor 24 for measuring the phosphate level coming out of adsorption vessel 6, and further provided with adsorption vessel egress valves 38. Adsorption vessel 6 further comprises phosphate adsorption element 12.

Operatively coupled with adsorption vessel 6 is regeneration system 14, provided with regeneration system ingress 13 and regeneration system egress 15. Regeneration system ingress 13 is provided with regeneration system ingress valves 40. Regeneration system 14 is provided with regeneration system phosphate sensor 30. Regeneration system 14 holds regeneration solution 17 and further comprises regeneration filtration unit 16, which is operatively coupled with regeneration system 14 and recycling loop 19. Regeneration system 14 also comprises concentrated regeneration solution tank 25, for providing the correct concentration of sodium hydroxide to regeneration solution 17. After filtration the phosphate filtrated by regeneration filtration unit 16 is stored in phosphate storage 23. Regeneration system 14 comprises regeneration subsystem 21A-D, which is a cascade configuration.

Control system 26 is operatively connected with system 2 via for example WiFi or Bluetooth. System 2 further comprises influent pump 18 for pumping the effluent, regeneration pump 20 for pumping the regeneration solution and backwash pump 22 for pumping the backwash water from flushing tank 42.

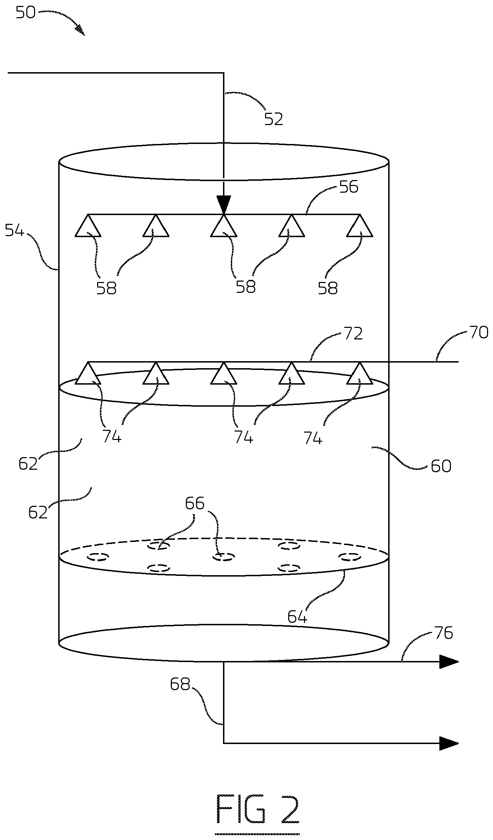

In a preferred embodiment adsorption vessel 50 (figure 2) relates to a presently preferred embodiment of vessel 4 (figure 1) and comprises ingress 52 for providing an influent to adsorption reactor 54 in a charging phase. Ingress 52 is operatively coupled with adsorption vessel ingress 8 (figure 1). The influent provided to adsorption reactor 54 is distributed to distribution device 56 which comprises nozzle 58. Adsorption vessel 50 further comprises adsorption bed 60, also known as adsorption element, which includes adsorption material 62. Adsorption bed 60 rests on plane 64, wherein plane 64 is provided with bubble caps 66. The effluent provided to adsorption vessel 50 can be removed via egress 68, which is operatively connected with adsorption vessel egress 10 (figure 1). The amount of adsorption material 62 is chosen according to the dimensions of vessel 50 and/or process conditions. Preferably, adsorption material 62 defines adsorption bed 60 as a packed bed.

When adsorption vessel 50 holding adsorption bed 60 is regenerated, adsorption vessel 50 is provided with regeneration liquid via regeneration liquid ingress 70. Regeneration liquid ingress 70 is operatively coupled with regeneration system egress 15. Regeneration liquid ingress 70 is operatively coupled with distribution device 72 which comprises nozzle 74. The regeneration liquid is removed from adsorption vessel via regeneration liquid egress 76, which is operatively coupled with regeneration system ingress 13.

It will be understood that effluent egress 68 and regeneration liquid return 76 can be the same.

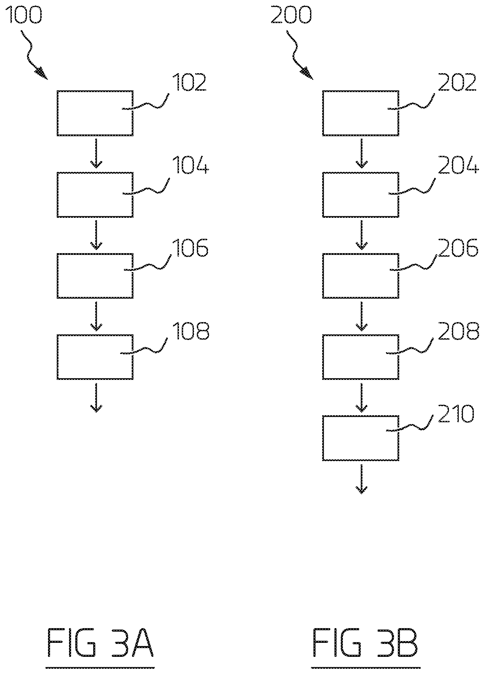

Method 100 (figure 3A) comprises the steps of providing a phosphate rich influent water flow 102, filtering the phosphate rich influent water flow 104, adsorbing the phosphate from the phosphate rich influent water flow on a phosphate adsorption element 106 and regenerating the phosphate adsorption element using a regeneration solution 108.

Method 200 (figure 3B) comprises the steps of providing a phosphate rich influent water flow 202, filtering the phosphate rich influent water flow 204, adsorbing the phosphate from the phosphate rich influent water flow on a phosphate adsorption element 206, regenerating the phosphate adsorption element using a regeneration solution 208 and separating the phosphate and regeneration solution 210.

In a preferred embodiment system 2 is provided with a phosphate rich influent, pumped through system 2 via influent pump 18. The influent flows through influent filtration unit ingress 5 into influent filtration unit 6, wherein the larger pieces in the influent gets filtrated by filtration unit 6. After filtration the influent flows through influent filtration unit egress 7, where the phosphate level is measured by regeneration system phosphate sensor 30, to adsorption vessel ingress 8 into adsorption vessel 4, phosphate level measurement is provided to controller 26. The phosphate in the influent gets filtrated out in adsorption vessel via phosphate adsorption element 12. After filtration, the influent flows through adsorption vessel egress 10, where the phosphate level gets measured by adsorption phosphate sensor 24, after which the influent become the effluent and flows out of system 2. Adsorption phosphate level is provided to controller 26.

If influent filtration unit sensor 28 measures that influent filtration unit 6 does not work properly anymore, backwash pump 22 can be activated by controller 26 to wash clean influent infiltration unit 6. If adsorption phosphate sensor 24 measures that the concentration of phosphate in the influent is too high, regeneration pump 20 starts pumping. Thereby regeneration solution 17 flows through regeneration system egress 15 into adsorption vessel 4, thereby cleaning adsorption phosphate element 12. Regeneration solution 17 thereby flows through regeneration filtration unit 16, which filters the phosphate from regeneration solution 17 and stores the phosphate in phosphate storage 23. This whole process is controlled by control unit 26, retrieving information from adsorption phosphate sensor 24, influent filtration unit sensor 28, and regeneration system phosphate sensor 30.

According to the invention, adsorption vessel 4 holding adsorption element 12 is regenerated by firstly flowing regeneration solution 17B, hold by regeneration subsystem 21B, through adsorption vessel 4 holding adsorption element 12. Regeneration solution 17B flows into regeneration subsystem 21C and becomes regeneration solution 17C. Secondly, regeneration solution 17A, hold by regeneration subsystem 21A, flows through adsorption vessel 4 holding adsorption element 12. Regeneration solution 17A flows into regeneration subsystem 21B and becomes regeneration solution 17B. Thirdly, regeneration solution 17D, hold by regeneration subsystem 21D, flows through adsorption vessel 4 holding adsorption element 12. Regeneration solution 17D flows into regeneration subsystem 21A and becomes regeneration solution 17A.

Regeneration solution 17C comprises the highest phosphorous content compared to regeneration solution 17A, 17B and 17D. Regeneration solution17C and dissolved phosphate are separated from each other by regeneration filtration unit 16. Regeneration solution 17C flows into regeneration subsystem 21D and becomes regeneration solution 17D. Together these processes form recycling loop 19.

In a preferred embodiment up to sixteen adsorption vessels were used. Using different starting moments for the use of the different adsorption vessels result in different moments of saturation of the adsorption vessels. The regeneration of the adsorption vessels is approximately 2 to 3 hours and the adsorption elements have a height of about 2.0 m, with of about 1.3 m and volume of about 1,400 L.

In a preferred embodiment the regeneration solution is an aqueous sodium hydroxide solution comprising a concentration of 2% - 3%. This solution is automatically derived from an aqueous sodium hydroxide stock solution comprising a concentration of about 40%.

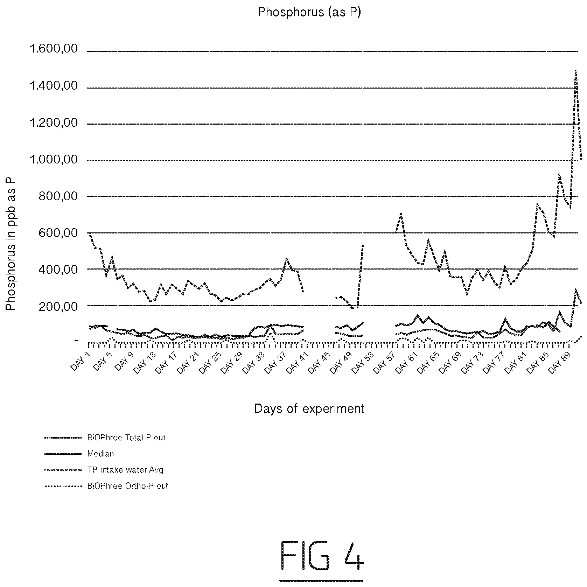

In an experiment performed with the system according to the invention, the concentration of phosphorous in ppb (upperline) in the average water intake was plotted in time (days) together with the adsorption vessel phosphor output (BiOPhree Ortho-P out) (lowerline), the BiOPhree Total P out (3rd line from above) and the Median (2nd line from above, figure 4) at day 49.

In a further experiment performed with the system according to the invention, metals were removed from the influent. The results of the experiment are disclosed in table 1. The influent was provided by the water authority ("waterschap") Aa and Maas. The concentrations of the metals of the effluent at the egress of the influent filtration unit (IF effluent) and the effluent at the adsorption vessel egress (AD effluent) were determined.

**Table 1: Concentrations metals in effluent.**

| **Element** | **Helophyte filter effluent µg/l** | **IF effluent µg/l** | **AD effluent µg/l** |
|---|---|---|---|
| **Al** | 85.0 ± 63.2 | 80 | 18 |
| **As** | <1.0 | <1.0 | <1.0 |
| **Cd** | <0.050 | <0.050 | <0.050 |
| **Cr** | 0.8 ± 0.2 | 4.8 | 2.5 |
| **Cu** | 2.0 ± 0.8 | 9.1 | 4.5 |
| **Fe** | 120.0 | 0.11 | 0.068 |
| **Ni** | 4.3 ± 1.2 | 7.2 | 5.4 |
| **Pb** | 0.31 | 0.84 | <0.20 |
| **Zn** | 25.7 ± 7.7 | 56 | 42 |
| **Hg** | <0.02 | <0.02 | <0.02 |

In a further experiment performed with the system according to the invention, the characteristics and quality of regeneration liquid were determined. It was found that an efficient and effective regeneration of the adsorption was achieved (Table 2). 0.5 L of the first regeneration bed volume was recovered which means that 33% of it was lost in the pores and during the process of switching between the adsorption and regeneration state. The regeneration solution is 3% NaOH aqueous solution.

**Table 2: Characteristics and quality of regeneration liquid, wherein BV is bed volumes and n.d. is not determined.**

| Regeneration procedure | Initial regeneration liquid, 3% NaOH | 1^{st} BV | 2^{nd} BV | 3^{rd} BV | 4^{th} BV | 5^{th} BV |
|---|---|---|---|---|---|---|
| Volume recovered L | - | 0.335 | 0.485 | 0.480 | 0.490 | 0.550 |
| P concentration mg P/L | 0 | 295.4 | 825.2 | 517.5 | 190.7 | 109.8 |
| Recovered P mg P | 0 | 99.0 | 400.2 | 248.4 | 93.4 | 60.4 |
| Total nitrogen mg/L | 0 | 24 | 260 | 130 | n.d. | n.d. |

| Total organic carbon mg/L | 0 | 7350 | 3780 | 1830 | n.d. | n.d. |
|---|---|---|---|---|---|---|
| pH | 13.1 | 11.2 | 13.0 | 13.1 | 13.2 | 13.1 |
| P alkalinity Mg CaCO₃/L | 49900 | 3800 | 25400 | 38100 | 27800 | 39500 |

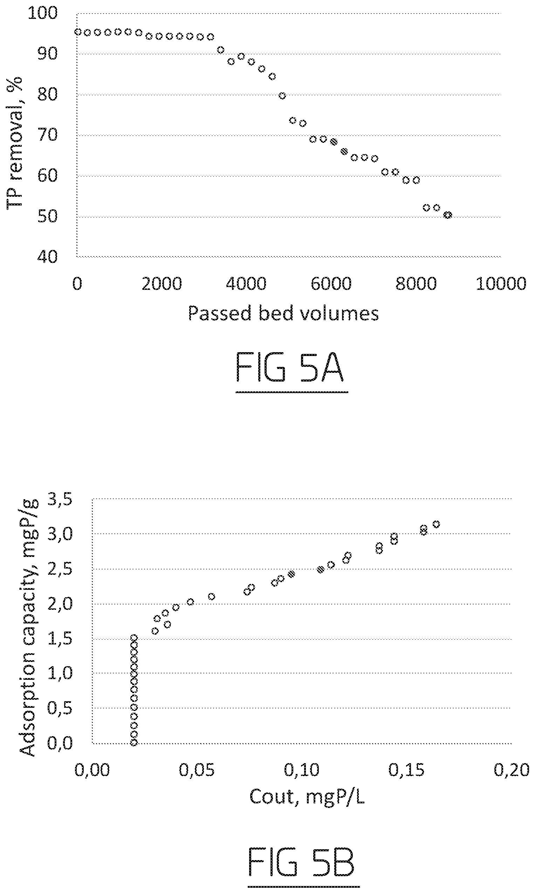

In a further experiment performed with the system according to the invention, 4.4 m³ of wastewater provided by the water authority 'Aa en Maas' , was used with a feed concentration of 0.39 ± 0.05 mg TP/L (wherein TP is total phosphorus) (figure 5A and figure 5B). A breakthrough point was reached at 0.1 mg TP/L which is between two solid black dots marked in figure 5A and B. The x-axis of figure 5A shows the amount of passed bed volumes and the y-axis of figure 5A shows the TP removal in percentage (%). The x-axis of figure 5B shows the Cₒᵤₜ in mg P/L and the y-axis shows the adsorption capacity in mg P/g. The breakthrough curve is not very steep and hence the adsorption is not saturated which is noted from figure 5B. The adsorption capacity at the breakthrough point is 2.5 mg P/g. Figure 5A and 5B show that if the breakthrough point is about 10 parts per billion about twice the amount of bed volumes possible is and an increase of 40% of phosphorus comprising material is loaded to the adsorption material.

The experiments clearly show the advantageous effects achieved with the system and method of the invention.

The present invention is by no means limited to the above described preferred embodiments thereof. The rights sought are defined by the following claims within the scope of which many modifications can be envisaged.

## Claims

1. System (2) for reducing algae bloom and microbial growth in aqueous systems comprising:
- at least one influent filtration unit (6) comprising an ingress (5) and an egress (7);
- at least one adsorption vessel (4) which is operatively coupled with the at least one influent filtration unit (6), the adsorption vessel comprising an ingress (8), an egress (10) and a phosphate adsorption element (12), wherein the phosphate adsorption element (12) is configured for adsorption of phosphates and removing the adsorbed phosphates from a phosphate containing influent water flow;
- a regeneration system (14) which is operatively coupled with the at least one adsorption vessel (4) and comprises an ingress (13) and an egress (15), wherein the regeneration system (14) is configured for holding a regeneration solution, and is configured to regenerate the at least one adsorption vessel (4), and wherein the regeneration system (14) comprises at least four regeneration subsystems (21 A-D) which are provided in a cascade configuration, wherein the regeneration subsystems (21 A-D) are configured to regenerate the adsorption vessel (4) by:
- firstly flowing regeneration solution 17B, held by regeneration subsystem 21B, through the adsorption vessel (4), wherein the regeneration solution 17B flows into regeneration subsystem 21C and becomes regeneration solution 17C;
- secondly, regeneration solution 17A, held by regeneration subsystem 21A, flows through the adsorption vessel (4), wherein regeneration solution 17A flows into regeneration subsystem 21B and becomes regeneration solution 17B;
- thirdly, regeneration solution 17D, held by regeneration subsystem 21D, flows through the adsorption vessel (4), wherein regeneration solution 17D flows into regeneration subsystem 21A and becomes regeneration solution 17A; and
- at least two pumps (18, 20), wherein the first pump (18) is configured to pump the influent and the second pump (20) is configured to pump the regeneration solution,
wherein the regeneration system (14) further comprises:
- a regeneration filtration unit (16), which is configured to separate the phosphate and regeneration solution, wherein the regeneration filtration unit (16) is operatively coupled to the egress of the regeneration subsystem comprising the highest phosphate concentration; and
- a recycling loop (19) configured to recycle the regeneration solution, wherein the recycling loop comprises the at least four regeneration subsystems (21 A-D), and wherein the separated regeneration solution in use flows back to the regeneration system (14),
wherein the cascade configuration of the regeneration subsystems (21 A-D) is configured to direct the regeneration solution in use from a regeneration subsystem (21 A-D) with a low phosphate concentration to a regeneration subsystem (21 A-D) with a high phosphate concentration.

2. System (2) according to any one of the preceding claims, further comprising a phosphate sensor (24) configured for sensing the phosphate concentration at the egress (10) of the adsorption vessel (4), and/or further comprising a control unit (26), for controlling the system (2).

3. System (2) according to any one of the preceding claims, wherein the regeneration filtration unit (16) is a nano-filtration unit, and/or wherein the at least one influent filtration unit (6) is an at least one ultra filtration unit.

4. System (2) according to any one of the preceding claims, wherein the regeneration solution is chosen from the group of aqueous sodium hydroxide, aqueous potassium hydroxide, or a mixture thereof.

5. System (2) according to any one of the preceding claims, wherein the at least one influent filtration unit (6) and/or the regeneration system (14) comprises a sensor (28, 30), wherein the sensor is configured to measure the phosphate level in the effluent.

6. Method (100, 200) for reducing algae bloom and microbial growth in aqueous systems comprising the steps of:
- providing a system (2) according to any one of the preceding claims;
- providing a phosphate rich influent water flow (102, 202) to the system;
- filtering the phosphate rich influent water flow (104, 204);
- adsorbing the phosphate from the phosphate rich influent water flow on a phosphate adsorption element (106, 206); and
- regenerating the phosphate adsorption element using a regeneration solution (108, 208).

7. Method according to claim 6, further comprising the step of separating the phosphate and regeneration solution (210).

8. Method according to claim 6 or 7, wherein the adsorbing is performed at a pH of 7 - 9, and/or wherein the regeration is performed at a pH of 10 - 11.

## Patentansprüche

1. System (2) zum Reduzieren von Algenblüte und mikrobiellem Wachstum in wässrigen Systemen, umfassend:
- mindestens eine Zuflussfiltrationseinheit (6), umfassend einen Eintritt (5) und einen Austritt (7);
- mindestens einen Adsorptionsbehälter (4), der mit der mindestens einen Zuflussfiltrationseinheit (6) wirkgekoppelt ist, der Adsorptionsbehälter umfassend einen Eintritt (8), einen Austritt (10) und ein Phosphatadsorptionselement (12), wobei das Phosphatadsorptionselement (12) für eine Adsorption von Phosphaten und zum Entfernen der adsorbierten Phosphate aus einem phosphathaltigen Zuflusswasserstrom konfiguriert ist;
- ein Regenerationssystem (14), das mit dem mindestens einen Adsorptionsbehälter (4) wirkgekoppelt ist und einen Eintritt (13) und einen Austritt (15) umfasst, wobei das Regenerationssystem (14) zum Halten einer Regenerationslösung konfiguriert ist und konfiguriert ist, um den mindestens einen Adsorptionsbehälter (4) zu regenerieren, und wobei das Regenerationssystem (14) mindestens vier Regenerationssubsysteme (21 A-D) umfasst, die in einer Kaskadenkonfiguration bereitgestellt sind, wobei die Regenerationssubsysteme (21 A-D) konfiguriert sind, um den Adsorptionsbehälter (4) zu regenerieren durch:
- erstens, Strömen von Regenerationslösung 17B, die durch das Regenerationssubsystem 21B gehalten wird, durch den Adsorptionsbehälter (4), wobei die Regenerationslösung 17B in das Regenerationssubsystem 21C strömt und Regenerationslösung 17C wird;
- zweitens, Regenerationslösung 17A, die durch das Regenerationssubsystem 21A gehalten wird, strömt durch den Adsorptionsbehälter (4), wobei die Regenerationslösung 17A in das Regenerationssubsystem 21B strömt und Regenerationslösung 17B wird;
- drittens, Regenerationslösung 17D, die durch das Regenerationssubsystem 21D gehalten wird, strömt durch den Adsorptionsbehälter (4), wobei die Regenerationslösung 17D in das Regenerationssubsystem 21A strömt und Regenerationslösung 17A wird;
- und mindestens zwei Pumpen (18, 20), wobei die erste Pumpe (18) konfiguriert ist, um den Zufluss zu pumpen, und die zweite Pumpe (20) konfiguriert ist, um die Regenerationslösung zu pumpen,
wobei das Regenerationssystem (14) ferner umfasst:
- eine Regenerationsfiltrationseinheit (16), die konfiguriert ist, um die Phosphat- und Regenerationslösung zu trennen, wobei die Regenerationsfiltrationseinheit (16) mit dem Austritt des Regenerationssubsystem, umfassend die höchste Phosphatkonzentration, wirkgekoppelt ist; und
- eine Recyclingschleife (19), die konfiguriert ist, um die Regenerationslösung zu recyceln, wobei die Recyclingschleife die mindestens vier Regenerationssubsysteme (21 A-D) umfasst und wobei die getrennte Regenerationslösung in Verwendung zu dem Regenerationssystem (14) zurückströmt,
wobei die Kaskadenkonfiguration der Regenerationssubsysteme (21 A-D) konfiguriert ist, um die Regenerationslösung in Verwendung von einem Regenerationssubsystem (21 A-D) mit einer niedrigen Phosphatkonzentration zu einem Regenerationssubsystem (21 A-D) mit einer hohen Phosphatkonzentration zu leiten.

2. System (2) nach einem der vorstehenden Ansprüche, ferner umfassend einen Phosphatsensor (24), der zum Erfassen der Phosphatkonzentration an dem Austritt(10) des Adsorptionsbehälters (4) konfiguriert ist, und/oder ferner umfassend eine Steuereinheit (26) zum Steuern des Systems (2).

3. System (2) nach einem der vorstehenden Ansprüche, wobei die Regenerationsfiltrationseinheit (16) eine Nanofiltrationseinheit ist und/oder wobei die mindestens eine Zuflussfiltrationseinheit (6) eine mindestens eine Ultrafiltrationseinheit ist.

4. System (2) nach einem der vorstehenden Ansprüche, wobei die Regenerationslösung aus der Gruppe von wässrigem Natriumhydroxid, wässrigem Kaliumhydroxid oder einer Mischung davon ausgewählt ist.

5. System (2) nach einem der vorstehenden Ansprüche, wobei die mindestens eine Zuflussfiltrationseinheit (6) und/oder das Regenerationssystem (14) einen Sensor (28, 30) umfasst, wobei der Sensor konfiguriert ist, um den Phosphatgehalt in dem Ausfluss zu messen.

6. Verfahren (100, 200) zum Reduzieren von Algenbläute und mikrobiellem Wachstum in wässrigen Systemen, umfassend die Schritte zum:
- Bereitstellen eines Systems (2) nach einem der vorstehenden Ansprüche;
- Bereitstellen eines phosphatreichen Zuflusswasserstroms (102, 202) an das System;
- Filtern des phosphatreichen Zuflusswasserstroms (104, 204);
- Adsorbieren des Phosphats aus dem phosphatreichen Zuflusswasserstrom auf einem Phosphatadsorptionselement (106, 206); und
- Regenerieren des Phosphatadsorptionselements unter Verwendung einer Regenerationslösung (108, 208).

7. Verfahren nach Anspruch 6, ferner umfassend den Schritt des Trennens der Phosphat- und Regenerationslösung (210).

8. Verfahren nach Anspruch 6 oder 7, wobei die Adsorption bei einem pH-Wert von 7 bis 9 durchgeführt wird und/oder wobei die Regeneration bei einem pH-Wert von 10 bis 11 durchgeführt wird.

## Revendications

1. Système (2) de réduction de prolifération d'algues et de croissance microbienne dans des systèmes aqueux comprenant :
- au moins une unité de filtration d'affluent (6) comprenant une entrée (5) et une sortie (7) ;
- au moins un récipient d'adsorption (4) qui est accouplé fonctionnellement à l'au moins une unité de filtration d'affluent (6), le récipient d'adsorption comprenant une entrée (8), une sortie (10) et un élément d'adsorption de phosphate (12), dans lequel l'élément d'adsorption de phosphate (12) est conçu pour l'adsorption de phosphates et l'élimination des phosphates adsorbés d'un écoulement d'eau d'affluent contenant du phosphate ;
- un système de régénération (14) qui est accouplé de manière fonctionnelle à l'au moins un récipient d'adsorption (4) et comprend une entrée (13) et une sortie (15), dans lequel le système de régénération (14) est configuré pour contenir une solution de régénération, et est configuré pour régénérer l'au moins un récipient d'adsorption (4), et dans lequel le système de régénération (14) comprend au moins quatre sous-systèmes de régénération (21 A-D) qui sont fournis dans une configuration en cascade, dans lequel les sous-systèmes de régénération (21 A-D) sont configurés pour régénérer le récipient d'adsorption (4) par :
- premièrement, l'écoulement de la solution de régénération 17B, contenue par le sous-système de régénération 21B, à travers le récipient d'adsorption (4), dans lequel la solution de régénération 17B s'écoule dans le sous-système de régénération 21C et devient la solution de régénération 17C ;
- deuxièmement, la solution de régénération 17A, contenue par le sous-système de régénération 21A, s'écoule à travers le récipient d'adsorption (4), dans laquelle la solution de régénération 17A s'écoule dans le sous-système de régénération 21B et devient la solution de régénération 17B ;
- troisièmement, la solution de régénération 17D, contenue par le sous-système de régénération 21D, s'écoule à travers le récipient d'adsorption (4), dans lequel la solution de régénération 17D s'écoule dans le sous-système de régénération 21A et devient la solution de régénération 17A ;
- et au moins deux pompes (18, 20), dans lequel la première pompe (18) est conçue pour pomper l'affluent et la seconde pompe (20) est conçue pour pomper la solution de régénération,
dans lequel le système de régénération (14) comprend en outre :
- une unité de filtration de régénération (16), qui est configurée pour séparer le phosphate et la solution de régénération, dans lequel l'unité de filtration de régénération (16) est accouplée fonctionnellement à la sortie du sous-système de régénération comprenant la concentration de phosphate la plus élevée ; et
- une boucle de recyclage (19) conçue pour recycler la solution de régénération, dans lequel la boucle de recyclage comprend les au moins quatre sous-systèmes de régénération (21 A-D), et dans lequel la solution de régénération séparée en utilisation retourne vers le système de régénération (14),
dans lequel la configuration en cascade des sous-systèmes de régénération (21 A-D) est conçue pour diriger la solution de régénération en utilisation à partir d'un sous-système de régénération (21 A-D) avec une concentration de phosphate faible à un sous-système de régénération (21 A-D) avec une concentration de phosphate élevée.

2. Système (2) selon l'une quelconque des revendications précédentes, comprenant en outre un capteur de phosphate (24) configuré pour détecter la concentration de phosphate au niveau de la sortie (10) du récipient d'adsorption (4), et/ou comprenant en outre une unité de commande (26), pour commander le système (2).

3. Système (2) selon l'une quelconque des revendications précédentes, dans lequel l'unité de filtration de régénération (16) est une unité de nanofiltration, et/ou dans lequel l'au moins une unité de filtration d'affluent (6) est une au moins une unité d'ultrafiltration.

4. Système (2) selon l'une quelconque des revendications précédentes, dans lequel la solution de régénération est choisie parmi le groupe constitué par l'hydroxyde de sodium aqueux, l'hydroxyde de potassium aqueux, ou un mélange de ceux-ci.

5. Système (2) selon l'une quelconque des revendications précédentes, dans lequel l'au moins une unité de filtration d'affluent (6) et/ou le système de régénération (14) comprend un capteur (28, 30), dans lequel le capteur est configuré pour mesurer le niveau de phosphate dans l'effluent.

6. Procédé (100, 200) de réduction de prolifération d'algues et de croissance microbienne dans des systèmes aqueux comprenant les étapes consistant à :
- fournir un système (2) selon l'une quelconque des revendications précédentes ;
- fournir un écoulement d'eau d'affluent riche en phosphate (102, 202) au système ;
- filtrer l'écoulement d'eau d'affluent riche en phosphate (104, 204) ;
- absorber le phosphate à partir de l'écoulement d'eau d'affluent riche en phosphate sur un élément d'adsorption de phosphate (106, 206) ; et
- regénérer l'élément d'adsorption de phosphate à l'aide d'une solution de régénération (108, 208).

7. Procédé selon la revendication 6, comprenant en outre l'étape de séparation du phosphate et de la solution de régénération (210).

8. Procédé selon la revendication 6 ou 7, dans lequel l'adsorption est effectuée à un pH de 7 à 9, et/ou dans lequel la régénération est effectuée à un pH de 10 à 11.
